# EUROPEAN PATENT APPLICATION

(11) **EP 4 852 605 A1**
(43) Date of publication of application: **09.12.2026**
(21) Application number: 24920794.5
(22) Date of filing: 29.01.2024
(51) Int. Cl.: H04W 76/28

(54) **WIRELESS COMMUNICATION METHODS AND APPARATUSES, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN)
(74) Representative: Grassi, Stefano
(86) International application number: PCT/CN2024/074518
(87) International publication number: WO 2025/160711

(57) **Abstract**

Provided in the embodiments of the present application are wireless communication methods and apparatuses, and a terminal device and a network device. A wireless communication method comprises: a terminal device receiving first information sent by a network device, the first information being used for instructing the terminal device to perform capability switching; and on the basis of the first information, the terminal device performing switching from a first capability to a second capability, wherein the terminal device supports a plurality of capabilities, the plurality of capabilities including the first capability and the second capability.

## Description

### TECHNICAL FIELD

Embodiments of the present application relate to the field of mobile communication technologies, in particular to a wireless communication method and apparatus, a terminal device, and a network device.

### BACKGROUND

The 5th Generation (5G) New Radio (NR) standard guarantees extremely high network system data rates, to meet minimum performance requirements for 5G data throughput set by the International Telecommunication Union (ITU). Meanwhile, energy consumption on the terminal side is also a critical performance requirement metric.

### SUMMARY

Embodiments of the present application provide a wireless communication method and apparatus, a terminal device, and a network device, aiming at saving energy consumption of the terminal device.

In a first aspect, an embodiment of the present application provides a wireless communication method. The method includes the following operations: a terminal device receives first information transmitted by a network device, the first information indicates a switching capability of the terminal device; and the terminal device switches from a first capability to a second capability according to the first information. The terminal device supports a plurality of capabilities including the first capability and the second capability.

In a second aspect, an embodiment of the present application provides a wireless communication method. The method includes an operation that: a network device transmits first information to a terminal device. The first information indicates a switching capability of a terminal device.

In a third aspect, an embodiment of the present application provides a wireless communication apparatus applied to a terminal device. The apparatus includes a first receiving module and a switching module. The first receiving module is configured to receive first information transmitted by a network device, the first information indicates a switching capability of the terminal device. The switching module is configured to switch from a first capability to a second capability according to the first information. Herein the terminal device supports a plurality of capabilities including the first capability and the second capability.

In a fourth aspect, an embodiment of the present application provides a wireless communication device applied to a network device. The device includes a first transmission module configured to transmit first information to a terminal device, the first information indicates a switching capability of the terminal device.

In a fifth aspect, an embodiment of the present application provides a terminal device, including a processor and a memory, the memory is used for storing a computer program, the processor is configured to call and execute a computer program stored in the memory to perform the method of the first aspect.

In a sixth aspect, an embodiment of the present application provides a network device, including a processor and a memory, the memory is used for storing a computer program, the processor is configured to call and execute a computer program stored in the memory, to perform the method of the second aspect.

In a seventh aspect, an embodiment of the present application provides a chip, including a processor configured to call and execute a computer program from a memory to cause a device in which the chip is mounted to perform the method of the first aspect.

According to an eighth aspect, an embodiment of the present application provides a chip, including a processor configured to call and execute a computer program from a memory, to cause a device in which the chip is mounted to perform the method of the second aspect.

In a ninth aspect, an embodiment of the present disclosure provides a computer-readable storage medium for storing a computer program that causes a computer to perform the method of the first aspect.

In a tenth aspect, an embodiment of the present disclosure provides a computer-readable storage medium for storing a computer program that causes a computer to perform the method of the second aspect.

In an eleventh aspect, an embodiment of the present application provides a computer program product including computer program instructions that cause a computer to perform the method of the first aspect.

In a twelfth aspect, an embodiment of the present application provides a computer program product including computer program instructions that cause a computer to perform the method of the second aspect.

In a thirteenth aspect, an embodiment of the present application provides a computer program that causes a computer to perform the method of the first aspect.

In a fourteenth aspect, an embodiment of the present application provides a computer program that causes a computer to perform the method of the second aspect.

### BRIEF DESCRIPTION OF THE DRAWINGS

Accompanying drawings described herein are used to provide a further understanding of the present application and constitute a part of the present application. The schematic embodiments of the present application and the description thereof are used to explain the present application and do not constitute an improper limitation of the present application. In the drawings:
FIG. 1 is a schematic diagram of an application scenario according to an embodiment of the present application;
FIG. 2 is a schematic diagram of an active time and an inactive time for Discontinuous Reception (DRX);
FIG. 3 is a first schematic diagram of an implementation flow of a wireless communication method provided by an embodiment of the present application;
FIG. 4 is a schematic diagram of time domain full capacity processing of a terminal device provided by an embodiment of the present application;
FIG. 5 is a schematic diagram of time domain semi-capability processing of a terminal device provided by an embodiment of the present application;
FIG. 6 is a schematic diagram of sparse time domain capability processing of a terminal device provided by an embodiment of the present application;
FIG. 7 is a second schematic diagram of an implementation flow of a wireless communication method provided by an embodiment of the present application;
FIG. 8 is a third schematic diagram of an implementation flow of a wireless communication method provided by an embodiment of the present application;
FIG. 9 is a schematic diagram of transform between a large processing kernel and a small processing kernel provided by an embodiment of the present application;
FIG. 10 is a first schematic structural diagram of a wireless communication device provided by an embodiment of the present application;
FIG. 11 is a second schematic structural diagram of a wireless communication device provided by an embodiment of the present application;
FIG. 12 is a schematic structural diagram of a communication device provided by an embodiment of the present application;
FIG. 13 is a schematic structural diagram of a chip according to an embodiment of the present application;
FIG. 14 is a schematic block diagram of a communication system provided by an embodiment of the present application.

### DETAILED DESCRIPTION

Technical solutions in embodiments of the present application will be described below with reference to the accompanying drawings in the embodiments of the present application. Obviously, the described embodiments are some embodiments of the present application, but not all embodiments. Based on the embodiments in the present application, all other embodiments obtained by those of ordinary skill in the art without making creative efforts fall within the protection scope of the present application.

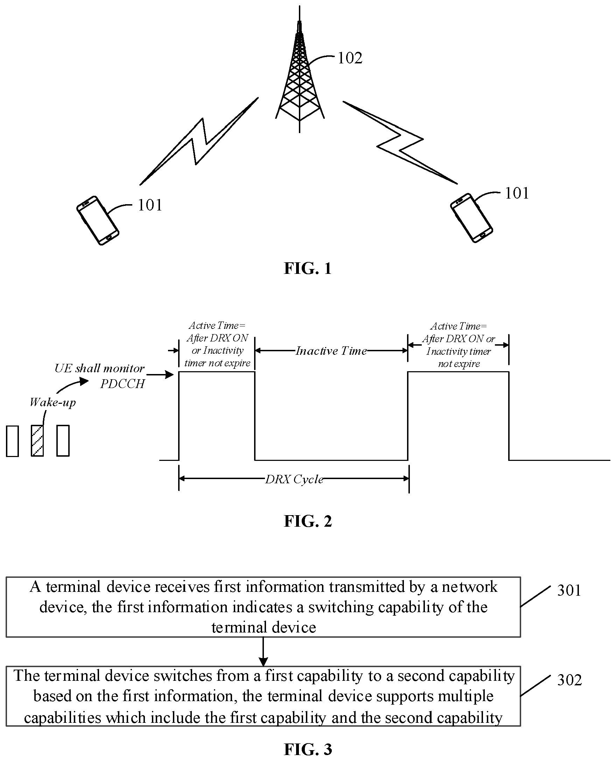

FIG. 1 is a schematic diagram of an application scenario according to an embodiment of the present application. As shown in FIG. 1, a communication system 10 may include a terminal device 101 and a network device 102. The network device 102 may communicate with the terminal device 101 through an air interface. Multi-service transmission is supported between the terminal device 101 and the network device 102.

It should be understood that the embodiments of the present application are only described by using the communication system 10 as an example, but the embodiments of the present application are not limited thereto. That is, the technical solution of the embodiments of the present application can be applied to various communication systems, such as an Internet of Things (IoT) system, a Narrow Band Internet of Things (NB-IoT) system, a Long Term Evolution (LTE) system, an LTE Time Division Duplex (TDD) system, a Universal Mobile Telecommunication System (UMTS), an enhanced Machine-Type Communications (eMTC) System, a 5G communication System (also known as NR communication System), or a future communication System, etc.

In the communication system 10 illustrated in FIG. 1, the network device 102 may be an access network device that communicates with the terminal device 101. The access network device may provide communication coverage for a specific geographical area and may communicate with the terminal device 101 located within the coverage area.

The terminal device 101 may be any terminal device including, but not limited to, a terminal device that connects to the network device 102 or other terminal devices by means of a wired or wireless connection.

For example, the terminal device 101 may refer to a compact terminal or a lightweight terminal (for example, an IoT device such as Ambient (A-IoT), a wearable device such as a telephone watch, or a low-power mobile phone), an access terminal, a User Equipment (UE), a user unit, a user station, a mobile station, a mobile site, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, a satellite handheld terminal, a Wireless Local Loop (WLL) station, a Personal Digital Assistant (PDA), a handheld device with wireless communication capabilities, a computing device or other processing device connected to a wireless modem, an in-vehicle device, a terminal device in a 5G network, or a terminal device in a future evolution network, or the like.

The terminal Device 101 may be used for device-to-device (D2D) communication.

The network device 102 may be an Evolutionary Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN), or the Network device 102 may be a relay station, an access point, an in-vehicle device, a wearable device, a hub, a switch, a bridge, a router, or a Network device in a future-evolving Public Land Mobile Network (PLMN).

The various functional units in the communication system 10 may also establish connections through a Next Generation (NG) interface to enable communication.

For example, the terminal device establishes an air interface connection with the access network device through the NR interface for transmitting user plane data and control plane signaling. The terminal device can establish a control plane signaling connection with the AMF through the NG interface 1 (abbreviated as N1). An access network device, such as a next generation radio access base station (gNB), can establish a user plane data connection with the UPF through the NG interface 3 (abbreviated as N3). The access network device can establish a control plane signaling connection with the AMF through the NG interface 2 (abbreviated as N2). The UPF can establish a control plane signaling connection with the SMF through the NG interface 4 (abbreviated as N4). The UPF can interact user plane data with the data network through the NG interface 6 (abbreviated as N6). The AMF may establish a control plane signaling connection with the SMF through the NG interface 11 (abbreviated as N11). The SMF may establish a control plane signaling connection with the PCF through the NG interface 7 (N7 for short).

FIG. 1 exemplarily illustrates one base station and two terminal devices. Optionally, the communication system 10 may include a plurality of base station devices and another number of terminal devices may be included in the coverage area of each base station, which is not limited in the embodiments of the present application.

It should be noted that FIG. 1 merely illustrates a system to which the present application is applicable in the form of an example. Alternatively, the method illustrated in the embodiments of the present application may be applicable to other systems. Furthermore, the terms "system" and "network" are often used interchangeably herein. The term "and/or" herein is merely an association relationship that describes associated objects, and indicates that there may be three relationships, for example, A and/or B, which may indicate that A exists alone, both A and B exists, or B exists alone. In addition, the character "/" herein generally indicates that the associated objects before and after the character "/"are in an "or" relationship. It should also be understood that the "indication" referred to in the embodiments of the present application may be a direct indication, an indirect indication, or an indication that there is an association relationship. For example, A indicates B, which may mean that A directly indicates B, e.g., B may be acquired by A; or may indicate that A indirectly indicates B, for example, A indicates C, and B can be acquired by C; or may indicate that there is an association relationship between A and B. It should also be understood that the "corresponding to" mentioned in the embodiments of the present application may mean that there is a direct correspondence or an indirect correspondence between two items, or may mean that there is a correlation between the two items, or may be a relationship between instruction and being instructed, configuration and being configured, or the like. It should also be understood that the "predefined" or "predefined rules" mentioned in the embodiments of the present application can be realized by storing corresponding codes, tables, or other means that can be used to indicate relevant information in advance in devices (for example, including terminal devices and network devices), and the specific implementation method thereof is not limited in the present application. For example, predefined may refer to defined in a protocol. It should also be understood that in the embodiments of the present application, the "protocol" refers to a standard protocol in the communication field, and may include, for example, an LTE protocol, an NR protocol, an IoT-NTN protocol, an NR-NTN protocol, and related protocols applied to future communication systems, and the present application is not limited thereto.

In order to facilitate understanding of the technical scheme of the embodiments of the present application, related technologies for the embodiments of the present application will be described below. The following related technologies can be arbitrarily combined with the technical scheme of the embodiments of the present application as optional schemes, and all of them belong to the protection scope of the embodiments of the present application.

### • DRX

For the consideration on terminal power saving, all communication systems support DRX transmission mechanism. The main principle of this mechanism is to discontinuously receive signals in the time domain through semi-static configuration. When there is no data transmission, the power consumption can be reduced by stopping receiving a Physical Downlink Control Channel (PDCCH) (at which time blind detection for the PDCCH is stopped).

The DRX configuration method is to configure one DRX cycle for a UE in a RRC_CONNECTED state. As shown in FIG. 2, the DRX cycle consists of an "Active Time" and an "Inactive Time". During the "Active Time", the UE monitors and receives a PDCCH (Active period). During the "Inactive Time", the UE does not receive the PDCCH to reduce power consumption (sleep period).

### • DRX Wake-up Signal

In the energy-saving enhancement of NR, DRX ON can also be used in conjunction with a wake-up signal mechanism. Specifically, the terminal receives an indication of an energy-saving wake-up signal before the DRX ON duration. With reference to FIG. 2, when the terminal has data transmission in one DRX cycle, the power-saving wake-up signal "wakes up" the terminal to detect the PDCCH in the DRX ON duration. Otherwise, when the terminal has no data transmission in one DRX cycle, the energy saving wake-up signal does not "wake up" the terminal, and the terminal does not need to detect the PDCCH in the DRX ON Duration. Compared with the existing DRX mechanism, when the terminal has no data transmission, the terminal may omit PDCCH detection during the DRX ON Duration, thereby reducing energy consumption. A time for the terminal before the DRX ON Duration is referred to as an inactive time. A time for the terminal within the DRX ON Duration is referred to as an active time. The DRX wake-up signal itself also adopts a waveform and structure similar to that of the PDCCH.

### • Terminal complexity optimization

The terminal design for the NR supports extremely high peak rates. Therefore, the capability requirement for the terminal is high. The LTE standard defines a single carrier bandwidth of up to 20 MHz, and a larger bandwidth is achieved by multi-carrier aggregation. In 5G NR, it ultimately defines a maximum carrier bandwidth of 100 MHz in the band below 6 GHz, which is already 5 times that of LTE. A maximum carrier bandwidth in the millimeter wave band is 400 MHz. The Multiple Input Multiple Output (MIMO) antenna scale required by the NR has also been further improved. A reference configuration for an antenna of the terminal in the LTE is one transmission and two receptions, while it requires two transmission and four reception antennas at a frequency above 2500 MHz. NR R15/R16 also does not support half-duplex, and requires that the data processing can be performed on all slots (slots) for uplink and downlink.

However, for processing capacity and speed, such high processing capability is not required in some application scenarios of the NR, including the application in IoT, industrial automation, and wearable devices. In these scenarios, the communication hardware is required to have low volume and power consumption. Lightweight capability requirements are characteristic of such terminals. Based on such considerations, NR R17 studies the introduction of reduced capability compact terminal standards.

In the compact terminal standard, the required capabilities of some NRs are reduced. Corresponding terminal function groups are defined for such capabilities. In the compact terminal standard, power consumption in terminal identification, access processes and optimization measurement is further optimized to suit relevant application scenarios.

The design of such a compact terminal can significantly reduce the complexity of the hardware of the terminal. Meanwhile, the energy consumption of the terminal can be correspondingly reduced, and the function of energy saving can also be achieved.

It will be appreciated that the wake-up signal is used for energy saving mainly by controlling the DRX ON of the terminal. This is an energy-saving way to control sleep and wake-up in time. However, transceivers of the terminal waken up tend to be waken up as a whole, the transceivers cannot be partially turned on and off depending on the data throughput.

In the introduction of the compact terminal, the transceivers of the terminal are often customized according to a fixed capability specification. This does not design the transceiver in a modular manner, nor does it modularly switch some of the transceiver according to the data capacity.

Based on the above analysis, an embodiment of the present application provides a wireless communication method. FIG. 3 is a first schematic diagram of the implementation flow of the wireless communication method provided by the embodiment of the present application. As shown in FIG. 3, the method includes operations 301 and 302:

In Operation 301, a terminal device receives first information transmitted by a network device. The first information indicates a switching capability of the terminal device.

In Operation 302, the terminal device switches from a first capability to a second capability according to the first information. The terminal device supports a plurality of capabilities including the first capability and the second capability.

It can be understood that in the embodiments of the present application, the terminal device supports a plurality of capabilities. The terminal device switches capabilities based on an indication of the network device, to achieve the purpose of energy saving.

Hereinafter, further optional embodiments of each of the above-described operations, related terms, and the like will be described.

In operation 301, the terminal device receives the first information transmitted by the network device. The first information indicates the switching capability of the terminal device.

In the embodiments of the present application, there is no limitation on the type of signaling in which the first information is carried. The first information may be carried in downlink signaling during a random access procedure, or may be carried in downlink signaling after the random access. Exemplarily, in some embodiments, the first Information is carried in Medium Access Control (MAC) signaling, Downlink Control Information (DCI), or Radio Resource Control (RRC) signaling.

In some embodiments, in the DRX mechanism, the first information may also be carried in downlink signaling during the active time of the DRX cycle. In other embodiments, in the DRX wake-up signal mechanism, the first information may also be carried in downlink signaling in the DRX ON duration, and/or in signaling carrying the wake-up signal.

In the embodiment in which the first information is carried in the DCI, in the embodiments of the present application, the configuration manner of the first information in the DCI is not limited, and may be various. The first information may indicate the switching capability of the terminal device through an indication field of the existing DCI, or may indicate the switching capability of the terminal device through new DCI. The first information may indicate the switching capability of the terminal device through a certain reserved bit/reserved bits in the existing DCI, for example, through a reserved bit for a resource parameter in the DCI, the resource parameter may be a parameter indicating the number of RBs.

In the embodiments of the present application, the manner of indicating the first information is not limited. The first information includes a first value for indicating the switching capability and/or a second value for indicating the second capability. For example, one capability corresponds to one capability option, and the second value is used to indicate the capability option. It can be understood that for an embodiment in which the first information includes the second value (excluding the first value), it is also a way in which the first information indicates the switching capability of the terminal device.

In operation 302, the terminal device switches from the first capability to the second capability according to the first information. The terminal device supports a plurality of capabilities including the first capability and the second capability.

In some embodiments, the first capability is a current capability of the terminal device.

In some embodiments, the operation 302 includes an operation that: the terminal device switches from the first capability to the second capability according to the second capability indicated by the first information.

In other embodiments, the operation 302 includes operations that: the terminal device determines the second capability based on the first information, and the terminal device switches from the first capability to the second capability. Exemplarily, for an embodiment in which the first information does not include the second value, the terminal device may determine a default capability as the second capability based on the first information. For example, the terminal device supports two capabilities, and the default capability is another capability different from the first capability.

As previously described, the terminal device supports a plurality of capabilities, one capability is defined by one or more dimension capabilities. In the embodiments of the present application, the definition of the capability of the terminal device is not limited. In some embodiments, the capability includes one or more of (1) to (4) of the following:
(1) a time domain dimension capability of the terminal device;
(2) a frequency domain dimension capability of the terminal device;
(3) a spatial dimension capability of the terminal device; and
(4) a throughput dimension capability of the terminal device.

The time domain dimensional capability described in (1) above can also be understood as a time dimension capability. In some embodiments, the time domain dimension capability of the terminal device includes: a time interval of unit-time channels that the terminal device is capable of receiving and/or transmitting. A unit-time channel refer to a control channel and/or a data channel of a unit time.

It can be understood that defining the capabilities of the terminal device from the time domain dimension supports more ranges and is more flexible, and can define more different capabilities.

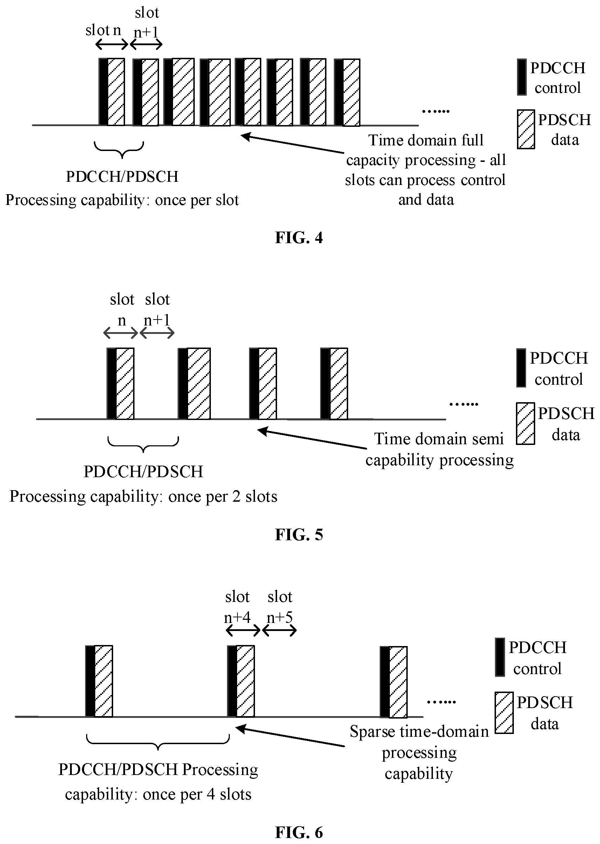

For example, as shown in FIG. 4, the terminal device supports time-domain full capability/time-domain full capability processing. That is, a time period taken to receive a one-slot PDCCH/PDSCH is 1 slot. That is, the capability of the terminal device for the PDCCH/PDSCH includes once per slot.

As also shown in FIG. 5, the terminal device also supports time-domain half-capability/time-domain half-capability processing. That is, a time period taken to receive a one-slot PDCCH/PDSCH is 2 slots. That is, the capability of the terminal device for the PDCCH/PDSCH includes once per 2 slots.

As also shown in FIG. 6, the terminal device also supports sparser time domain capability/sparser time domain processing capability. That is, a time period taken to receive a one-slot PDCCH/PDSCH is 4 slots. That is, the capability of the terminal device for the PDCCH/PDSCH includes once per 4 slots.

FIGs. 4 to 6 are merely illustrative of the time domain dimension capabilities supported by the terminal device, but this does not limit the embodiments of the present application. The time domain dimension capabilities supported by the terminal device may include: once per slot, once per 2 slots, once per 4 slots, and/or once per 8 slots, and the like.

In some embodiments, the frequency domain dimension capability described in (2) above includes a bandwidth of a control channel and/or a data channel that the terminal device is capable of receiving and/or transmitting in a unit time.

Optionally, a combination scheme is that the frequency domain dimension capability of the terminal device includes a bandwidth of a control channel and a data channel that the terminal device is capable of receiving and transmitting in a unit time. The terminal device may support multi-level frequency domain dimension capabilities. Taking a Resource Block (RB) as an example, the bandwidth may be a bandwidth corresponding to {12, 25, 50, 100} RBs, etc.

The spatial dimension capability described in (3) above can also be understood as a space-domain dimension capability. In some embodiments, the spatial dimension capability of the terminal device includes: the number of antennas that the terminal device is capable of using; and/or the number of channel layers that the terminal device is capable of receiving and/or transmitting.

The throughput dimension capability described in (4) above can also be understood as the throughput capability of information processing. In some embodiments, the throughput dimension capability of the terminal device includes one or more of (4-1) - (4-4) below:
(4-1) an amount of control information in a control channel that the terminal device is capable of receiving and/or transmitting in a unit time;
(4-2) a throughput of a data channel that the terminal device is capable of receiving and/or transmitting;
(4-3) an amount of measurements that the terminal device is capable of performing in a unit time and/or an amount of measurements that the terminal device is capable of reporting in a unit time;
(4-4) a throughput of operations that the terminal device is capable of performing.

Here, (4-1) is an example of control throughput dimensional capability, (4-2) is an example of data throughput dimensional capability, and (4-3) is an example of measurement throughput dimensional capability.

For the capabilities described in (4-1), one combined scheme is the amount of control information in the control channel that the terminal device is capable of receiving or transmitting in a unit time. In one possible implementation, the amount of control information may be the amount of control information that the terminal device is capable of receiving in a unit time. For example, the control information refers to a downlink control information Format (DCI Format).

For the capabilities described in (4-2), one combined scheme is the throughput of the downlink data channel that the terminal device is capable of receiving in a unit time, e.g., the number of bits of downlink data that the terminal device is capable of receiving in a unit time. Another combined scheme is the throughput of the uplink data channel that the terminal device is capable of transmitting in a unit time, e.g., the number of bits of uplink data that the terminal device is capable of receiving in a unit time.

For the capabilities described in (4-3) above, the amount of measurements that the terminal device is capable of performing in a unit time, for example, may refer to the number or bandwidth (for example, how many RBs a measurement signal occupies) of downlink measurements that the terminal device is capable of performing in a unit time.

The amount of measurements that the terminal device is capable of reporting in a unit time may refer to, for example, the number of times the terminal device reports measurement reports in a unit time, or the accumulated measurement bandwidth that the terminal device reports in a unit time (for example, a bandwidth of 20 MHz, if the terminal device measures 10 times in a unit time, the accumulated measurement bandwidth reported is 200 MHz).

The capabilities described in (4-4) above is for example, the number of floating point operations (FLOPs) that the terminal device is capable of performing in a unit time.

As described above, in the embodiments of the present application, the capability of the terminal device may be defined from at least one dimension of a time domain dimension capability, a frequency domain dimension capability, a spatial dimension capability, and a throughput dimension capability. As for these four-dimension capabilities, the above description has given what abilities these four dimensions can specifically include. It can be seen that in the embodiments of the present application, the capability of the terminal device can have a variety of combined schemes/combined capabilities, and it is defined that the capability of the terminal device can be any one of the above-mentioned multiple combined schemes, and any one combined scheme belongs to the protection scope of the present application;

Herein,
In one possible combined scheme, the capability of the terminal device include: a time interval of unit-time control and data channels that the terminal device is capable of receiving and transmitting. It can be understood that in this combined scheme, the capability of the terminal device is defined from the time domain dimension, which supports more range and is more flexible. More different capabilities (for example, the capability/processing capability of the terminal device for PDCCH/PDSCH includes once per slot, once per 2 slots, once per 4 slots, and/or once per 8 slots, etc.) can be defined, which is more beneficial to the energy saving of the terminal device.

In another possible combination, the capabilities of the terminal device include the bandwidth of the control channel and/or the data channel that the terminal device is capable of receiving and transmitting in a unit time. It can be understood that in this combined scheme, the capability of the terminal device is defined from the frequency domain dimension, which supports a wide range and is more flexible. More different capabilities (for example, the bandwidth of the control channel and the data channel that the terminal device is capable of receiving and transmitting in a unit time includes {12, 25, 50, 100} RB) can be defined, which is more beneficial to the energy saving of the terminal device.

In yet another possible combination, the capability of the terminal device includes: a time interval of unit-time control and data channels that the terminal device is capable of receiving and transmitting, and a bandwidth of a control channel and/or a data channel that the terminal device is capable of receiving and transmitting in a unit time. In this way, based on the time domain dimension capability and the frequency domain dimension capability, more different capabilities can be combined, which is beneficial to better optimize the energy saving of the terminal device.

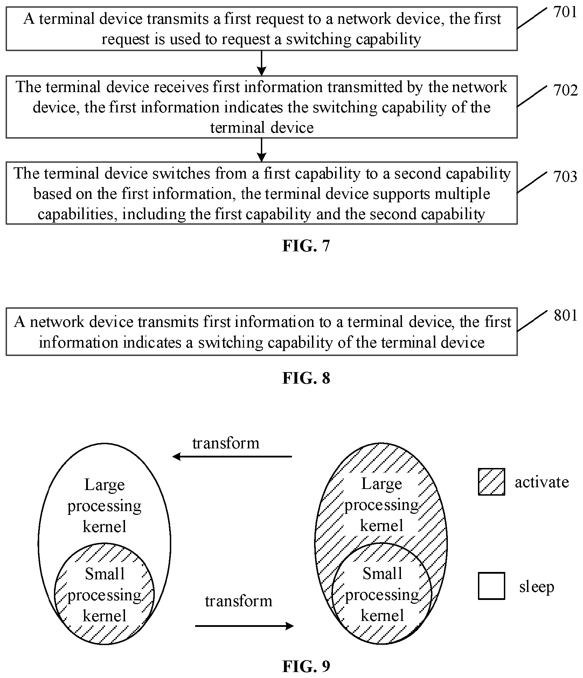

Optionally, the first information may be received by the terminal device before requesting the switching capability from the network device, or may be received by the terminal device after requesting the switching capability from the network device. In one possible implementation, the wireless communication method shown in FIG. 7 includes the following operations 701 to 703:

In Operation 701, a terminal device transmits a first request to a network device, the first request is used to request a switching capability.

It can be understood that the network device may transmit first information to the terminal device based on the first request.

In the embodiments of the present application, the first request may or may not carry second information. The second information indicates a processing capability that the terminal device expects to switch. For example, the second information indicates the second capability. The manner of indicating may be to indicate a capability option with a value, herein one capability corresponds to one capability option.

In operation 702, the terminal device receives the first information transmitted by the network device. The first information indicates a switching capability of the terminal device.

For the description of the contents related to operation 702, it can be understood with reference to the previous description related to operation 301, and will not be described again here.

In operation 703, the terminal device switches from the first capability to the second capability according to the first information. The terminal device supports a plurality of capabilities including the first capability and the second capability.

For a description of the contents related to operation 703, it can be understood with reference to the previous description related to operation 302, and will not be described again here.

For any of the above embodiments, further, in some embodiments, the operation that the terminal device switches from the first capability to the second capability includes an operation that: the terminal device switches from the first capability to the second capability within a first period of time.

It will be appreciated that it takes a certain period of time for the terminal device to complete the switching of capabilities because the terminal device needs to complete the configuration parameters required to achieve the switching of capabilities. However, in order to ensure the communication latency of the terminal device and at the same time facilitate the subsequent scheduling of the network device, in one possible implementation, it may be defined that the terminal device completes the configuration of the configuration parameter within a certain period of time, that is, the terminal device switches from the first capability to the second capability within the first period of time.

In the embodiments of the present application, the first period of time may be a default value, may be determined by the terminal device based on the first capability, or may be transmitted by the network device.

For the scheme that the network device transmits the first period of time, in some embodiments, the method further includes an operation that the terminal device receives fourth information transmitted by the network device. The fourth information indicates the first period of time. The first period of time is determined based on the first capability. That is, the first period of time is determined based on the capability of the terminal device before performing the capability switching. In this way, it is beneficial for the network device to perform subsequent scheduling. In one possible implementation, the first period of time may be K slots, K is greater than or equal to 1.

In some embodiments, the fourth information and the first information may be carried in a same signaling. Or, the fourth information and the first information may be carried in different signaling, and the present application is not limited thereto.

It can be understood that the corresponding measurements also need to be adaptively adjusted after the terminal device has completed the capability switching. That is, in some embodiments, the method further includes an operation that: the terminal device performs a measurement based on a measurement parameter corresponding to the second capability.

In a possible implementation, the measurement parameter corresponding to the second capability includes a bandwidth, a number of RBs, a time interval, and the like.

In some embodiments, the operation that the terminal device performs measurement based on the measurement parameter corresponding to the second capability includes an operation that: the terminal device performs measurement based on the measurement parameter corresponding to the second capability after a second period of time following the switching to the second capability.

It can be understood that the switching capability of the terminal device may be advanced. For example, the first information is indicated by a reserved bit in the DCI, so the terminal device needs to accordingly adjust the measurement after a certain time following the switching of capability (such as L slots, L is greater than or equal to 1).

In some embodiments, the terminal device may report a plurality of supported capabilities to the network device. That is, in some embodiments, any of the above wireless communication methods further includes an operation that: the terminal device reports third information to the network device. The third information indicates a plurality of capabilities supported by the terminal device.

In a possible implementation, the third information indicates capability options respectively corresponding to a plurality of capabilities supported by the terminal device. One capability option corresponds to one capability. For example, the capability corresponding to the first capability option is: two antennas, 25 RBs, and once per 4 slots (i.e., the time interval for receiving one-time-unit PDCCH/PDSCH is 4 slots). The capability corresponding to another capability option is a combination different from the first capability option. In summary, for a plurality of capabilities supported by the terminal, the definition of the capability includes capabilities of at least one of the aforementioned dimensions.

In the embodiments of the present application, the timing at which the terminal device reports the third information is not limited. In some embodiments, the operation that the terminal device reports the third information to the network device includes an operation that: the terminal device reports the third information to the network device after initial access.

The present application does not limit when the terminal device specifically reports the third information to the network device after the initial access is completed. The terminal device can report the third information to the network device at any time after the initial access is completed.

An embodiment of the present application provides a wireless communication method. FIG. 8 is a third schematic diagram of an implementation flow of the wireless communication method provided by the embodiment of the present application. As shown in FIG. 8, the method includes the following operation 801.

In operation 801, a network device transmits first information to a terminal device. The first information indicates a switching capability of the terminal device.

In the embodiments of the present application, the method of carrying the first information is not limited. In some embodiments, the first information is carried in MAC signaling, DCI, or RRC signaling.

It will be appreciated that the first information is carried in the DCI or the MAC signaling, which is beneficial to the terminal device's capability to switch as early as possible.

It can be understood that, as described above for the embodiments of the terminal device side, the network device may actively transmit the first information indicating the switching capability to the terminal device without a request from the terminal device. The network device may transmit the first information to the terminal device based on a request from the terminal device. That is, in some embodiments, the method further includes an operation that: the network device receives a first request transmitted by the terminal device, the first request is used to request the switching capability. For example, in some embodiments, the network device receives the first request transmitted by the terminal device before transmitting the first information to the terminal device.

In some embodiments, the first request carries second information, and the second information indicates the capability of the terminal device to expect switching.

As described above for the embodiments of the terminal device side, the terminal device may report a plurality of capabilities supported to the network device. Accordingly, on the network device side, the method further includes an operation that: the network device receives third information reported by the terminal device. The third information indicates a plurality of capabilities supported by the terminal device.

In some embodiments, the operation that the network device receives the third information reported by the terminal device includes an operation that: the network device receives the third information reported by the terminal device after the terminal device initially accesses.

In some embodiments, the operation that the network device transmits the first information to the terminal device includes an operation that: the network device transmits the first information to the terminal device based on the third information.

Optionally, in some embodiments, the network device may determine a second capability based on the third information and the terminal device service demand (such as unprocessed data in a buffer of the terminal device), and the network device transmits the first information to the terminal device according to the second capability. The first information is used to instruct the terminal device to switch from a first capability to the second capability.

In some embodiments, the wireless communication method on the network device side further includes an operation that: the network device transmits fourth information to the terminal device. The fourth information is used to instruct the terminal device to complete the switching of the capability within a first period of time.

In some embodiments, the first period of time is determined based on the capability of the terminal device prior to the switching of the capability.

It should be noted that technical details not described in the above-described wireless communication method on the network device side can be understood with reference to the above-described description of the embodiments of the terminal device side.

It can be understood that in the above embodiments, the terminal device switches the capability based on the indication of the network device. That is, the terminal device switches from the first capability to the second capability according to the first information transmitted by the network device. Or, the terminal device may switch the capability without the indication of the network device. The terminal device may actively switch the capability without the indication of the network device. That is, an embodiment of the present application provides another wireless communication method which includes an operation that: a terminal device switches from a first capability to a second capability. The terminal device supports a plurality of capabilities including the first capability and the second capability.

Further, in some embodiments, the first capability is a current capability of the terminal device.

For the embodiment in which the terminal device actively switches the capability, further, in some embodiments, the method further includes an operation that the terminal device transmits fifth information to the network device. The fifth information indicates that the terminal device has switched to the second capability.

For the embodiment in which the terminal device actively switches the capability, the definition of the capability is the same as described above. That is, the capability includes one or more of the following:
a time domain dimension capability of the terminal device;
a frequency domain dimension capability of the terminal device;
a spatial dimension capability of the terminal device; or
a throughput dimension capability of the terminal device.

Further embodiments of each dimensional capability described above may be understood with reference to the foregoing description and will not be described in detail herein.

An exemplary application of an embodiment of the present application in a practical application scenario will be described below.

A terminal switches to a different capability/different processing core based on a switching signal of the base station or the terminal actively decides to switch to a different capability/different processing core. Herein the definition of the capability is in multiple dimensions.

The capability of the terminal includes time dimension, frequency dimension and spatial dimension. The capability of the terminal may further include a control throughput dimension, a data throughput dimension, and a measurement throughput dimension.

In a possible implementation, as in the first mode, the base station instructs the terminal to switch between a large core and a small core. That is, the base station transmits a switching signal (that is, the first information mentioned above) for the processing core to the terminal, instructs the terminal to dynamically switch to a different processing core. In the second mode, the terminal actively reports a selected large/small core. That is, the terminal transmits a processing core transform request or an expected processing core to the base station, and based on the request of the terminal, the base station transmits a switching signal for the processing core to the terminal to instruct the terminal to dynamically switch to a different processing core.

Whether it is the first mode or the second mode, the description of 1) to 10) below applies to both modes.
1) Defined different capabilities of the terminal correspond to different processing cores. The definition of capability is based on one or more dimensions: time dimension, frequency dimension and spatial dimension. The one or more dimensions may also include a control throughput dimension, a data throughput dimension, and a measurement throughput dimension.

According to the received indication of the switching signal, the terminal switches to the corresponding processing core in the indication. The terminal transmits and receives a control, transmits and receives data and performs measurement based on the capability corresponding to the processing core.
2) based on 1), herein the defined time dimensional capability includes:
   a time interval of the control/data channels that the terminal is capable of transmitting or receiving. Taking a slot-unit PDCCH/PDSCH as an example, the capability of the terminal device in the time dimension may be once per slot (see FIG. 4), once per 2 slots (see FIG. 5), once per 4 slots (see FIG. 6), once per 8 slots, or the like.
3) based on 1), herein the defined frequency domain dimensional capability includes:
   a bandwidth of a control/data channel that the terminal is capable of transmitting or receiving. For example, in unit of RB, the bandwidth may be the number of RBs, such as {12, 25, 50, 100} RBs, etc.
4) based on 1), herein the defined spatial dimensional capability includes:
   the number of antennas or the number of channel layers.
5) based on 1), herein the other dimension capabilities defined include:
   the amount of control information in a downlink or uplink control channel that the terminal is capable of transmitting or receiving;
   or, a throughput of a downlink or uplink data channel that the terminal is capable of transmitting or receiving;
   or, an amount of measurement that the terminal is capable of performing and an amount of measurements that the terminal device is capable of reporting;
   or, a throughput of operations of the terminal, such as the number of floating-point operations per unit time (FLOP), and so on.
6) Based on 1) to 4), the terminal switches the capability of the terminal according to a switching signal of the base station.

The terminal supports a plurality of different capabilities. The plurality of different capabilities are defined based on at least one dimension in 2) to 4). A small capability corresponds to an item with the lowest capability in at least one dimension. A large capability corresponds to an item with a higher capability in the at least one dimension.

As shown in FIG. 9, different capabilities of the terminal correspond to at least one large processing kernel and one small processing kernel. The capability of the small processing kernel is included in the large processing kernel.

The processing kernel can also be understood as a processing core. It can be understood that a terminal supports a plurality of capabilities, a difference in capabilities means a difference in energy consumption, and a switching of capabilities means a change in power consumption. It can be understood that the terminal supports multiple capabilities, which means that the terminal supports multiple hardware combinations that implement different capabilities. Different hardware combinations support different capabilities. For example, a set of hardware supports minimum capability, the set of hardware can be understood abstractly as a small core/small processing kernel, and a small core corresponds to the smallest power consumption. The combination of two small cores is a large core/large processing kernel, and the capability of the terminal is greater and the corresponding power consumption is greater compared with a small core. By switching between different capabilities, the terminal achieves the purpose of optimizing power efficiency, that is, the terminal can transmit or receive signals in a more power-saving way. For example, when the terminal has a large demand for services, the terminal operates with a large core; when the terminal has a small demand for services, the terminal operates with a small core, thus achieving the purpose of power saving.

7) Based on 6), the terminal can switch to the corresponding capability or processing core by a direct indication of dedicated signaling.

Alternatively, the terminal may switch the corresponding capabilities indirectly. The terminal switches to a specific capability through an indication field in the ordinary scheduling DCI or other common DCI control channel. For example, the switching of the processing kernel is indicated through a reserved value of the scheduled resource parameter.
8) Based on 6) to 7), different capabilities correspond to different configuration parameters, and the terminal completes the adjustment of the configuration parameters in K time slots after receiving the switching signal. The value of K is determined based on parameters including the bandwidth of the capability before switching, the number of RBs, the time interval, etc.
9) Based on 6) to 8) different capabilities of the terminals correspond to different measurement parameters, such as the bandwidth, the number of RBs and the time interval, etc. The switching triggers the corresponding adaptive adjustment of the measurement.
10) Based on 1) to 4), the terminal reports different capabilities supported and different processing cores after initial access.

It will be appreciated that the above scheme may enable the terminal to adaptively partially turn on and off the transceivers according to performance requirements such as data throughput. By defining the smallest generally supported processing core, terminals of different capability types are ensured to be universally accessed into the network. When a terminal requires a larger data throughput, it switches to a larger processing core. Such terminals no longer customize the terminal's transceiver according to a fixed capability specification. The terminal's transceiver may be designed in a modular manner. Finally, the terminal can switch some transceivers modularly according to the data capacity, so as to achieve the effect of dynamic energy saving.

In the embodiments of the present application, the terminal switches to different capabilities based on the switching signal from the base station or the terminal independently determines to switch to different capabilities. The definition of capability is in multiple dimensions, including a time dimension, a frequency dimension, and a spatial dimension. The multiple dimensions may also include a control throughput dimension, a data throughput dimension, and a measurement throughput dimension.

The terminal switches between different processing cores, so as to achieve different energy consumption and performance. However, in the related art, the terminal does not have multiple capabilities, and the terminal can only report a fixed capability, and the capability of the terminal remain unchanged after accessing the network. However, in the embodiments of the present application, the terminal has a plurality of capabilities, so that the purpose of power saving is achieved through capability switching. Further, in the embodiments of the present application, by indicating the switching capability of the terminal in the DCI or MAC signaling, the terminal can efficiently and quickly switch between different capabilities.

The preferred embodiments of the present application have been described in detail above with reference to the accompanying drawings, but the present application is not limited to the specific details in the above embodiments. A variety of simple modifications can be made to the technical scheme of the present application within the scope of the technical concept of the present application, and these simple modifications all belong to the protection scope of the present application. For example, each of the specific technical features described in the above-described detailed description can be combined in any suitable manner unless there is no contradiction. Various possible combinations will not be further described in this application in order to avoid unnecessary repetition. As another example, any combination of various embodiments of the present application may be made, and as long as it does not depart from the spirit of the present application, it should also be regarded as the disclosed content of the present application. For another example, on the premise that there is no conflict, various embodiments and/or the technical features in various embodiments described in the present application can be arbitrarily combined with the prior art, and the technical solution obtained after the combination should also fall within the protection scope of the present application.

It should also be understood that in the various method embodiments of the present application, the size of the sequence numbers of the above-described processes does not mean the order of the execution order. The execution order of various processes should be determined by their functions and internal logic, and should not constitute any limitation on the implementation process of the embodiments of the present application. Further, in the embodiments of the present application, the terms "downlink", "uplink", and "sidelink" are used to indicate a transmission direction of a signal or data. Herein "downlink" is used to indicate that the transmission direction of the signal or data is a first direction transmitted from the station to the user equipment of the cell, "uplink" is used to indicate that the transmission direction of the signal or data is a second direction transmitted from the user equipment of the cell to the station, and "sidelink" is used to indicate that the transmission direction of the signal or data is a third direction transmitted from the user equipment 1 to the user equipment 2. For example, "downlink signal" means that the transmission direction of the signal is the first direction. In addition, in the embodiments of the present application, the term "and/or" is merely an association relationship describing associated objects, indicating that there may be three kinds of relationships. Specifically, A and/or B may represent three cases in which A is present alone, both A and B are present, and B is present alone. In addition, the character "/" herein generally indicates that the associated objects before and after the character "/" are in an "or" relationship.

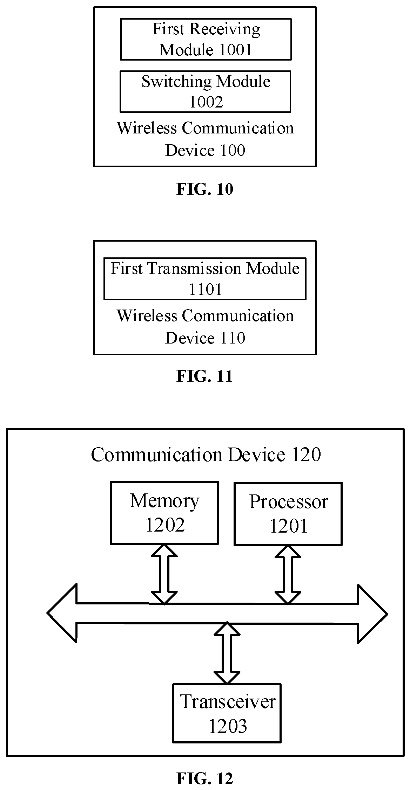

FIG. 10 is a first schematic structural diagram of a wireless communication device provided by an embodiment of the present application, which is applied to a terminal device. As shown in FIG. 10, the wireless communication device 100 includes a first receiving module 1001 and a switching module 1002.

The first receiving module 1001 is configured to receive first information transmitted by a network device, the first information indicates a switching capability of the terminal device.

The switching module 1002 is configured to switch the terminal device from a first capability to a second capability according to the first information. Herein the terminal device supports a plurality of capabilities including the first capability and the second capability.

In some embodiments, the first capability is a current capability of the terminal device.

In some embodiments, the wireless communication device 100 further includes a first transmission module configured to transmit a first request to the network device, the first request is used to request a switching capability.

In some embodiments, the first request carries second information, and the second information indicates a capability of the terminal device to expect switching.

In some embodiments, the capability includes one or more of:
a time domain dimension capability of the terminal device;
a frequency domain dimension capability of the terminal device;
a spatial dimension capability of the terminal device; or
a throughput dimension capability of the terminal device.

In some embodiments, the time domain dimension capability of the terminal device includes: a time interval of a unit-time channel that the terminal device is capable of receiving and/or transmitting, herein the unit-time channel refers to a control channel and/or a data channel of a unit time.

In some embodiments, the frequency domain dimension capabilities of the terminal device include a bandwidth of a control channel and/or a data channel that the terminal device is capable of receiving and/or transmitting in a unit time.

In some embodiments, the spatial dimension capability of the terminal device includes: the number of antennas that the terminal device is capable of using; and/or the number of channel layers that the terminal device is capable of receiving and/or transmitting.

In some embodiments, the throughput dimension capability of the terminal device includes one or more of:
an amount of control information in a control channel that the terminal device is capable of receiving and/or transmitting in a unit time;
a throughput of a data channel that the terminal device is capable of receiving and/or transmitting;
an amount of measurements that the terminal device is capable of performing in a unit time and/or an amount of measurements that the terminal device is capable of reporting in a unit time; or
a throughput of operations that the terminal device is capable of performing.

In some embodiments, the first information is carried in MAC signaling, DCI, or RRC signaling.

In some embodiments, the wireless communication device 100 further includes a first transmission module configured to: report third information to the network device, the third information indicates a plurality of capabilities supported by the terminal device.

In some embodiments, the operation of reporting the third information to the network device includes an operation of reporting the third information to the network device after initial access.

In some embodiments, the operation of switching the terminal device from the first capability to the second capability includes an operation of switching the terminal device from the first capability to the second capability within a first period of time.

In some embodiments, the first receiving module 1001 is further configured to receive fourth information transmitted by the network device. The fourth information indicates the first period of time. Herein the first period of time is determined based on the first capability.

In some embodiments, the wireless communication device 100 further includes a measurement module configured to perform measurement based on a measurement parameter corresponding to the second capability.

In some embodiments, the operation of performing measurement based on measurement parameter corresponding to the second capability includes an operation that the terminal device performs measurement based on the measurement parameter corresponding to the second capability after a second period of time following the switching to the second capability.

An embodiment of the present application further provides a wireless communication device. FIG. 11 is a second schematic structural diagram of the wireless communication device provided by the embodiment of the present application, which is applied to a network device. As shown in FIG. 11, the wireless communication device 110 includes a first transmission module 1101.

The first transmission module 1101 is configured to transmit first information to a terminal device, the first information indicates a switching capability of the terminal device.

In some embodiments, the wireless communication device 110 further includes a second receiving module configured to receive a first request transmitted by the terminal device, the first request is used to request a switching capability.

In some embodiments, the first request carries second information, the second information indicates a capability of the terminal device to expect switching.

In some embodiments, the capabilities include one or more of:
a time domain dimension capability of the terminal device;
a frequency domain dimension capability of the terminal device;
a spatial dimension capability of the terminal device; or
a throughput dimension capability of the terminal device.

In some embodiments, the time domain dimension capability of the terminal device includes: a time interval of unit-time channels that the terminal device is capable of receiving and/or transmitting; herein the unit-time channel refers to a control channel and/or a data channel of a unit time.

In some embodiments, the frequency domain dimension capabilities of the terminal device include a bandwidth of a control channel and/or a data channel that the terminal device is capable of receiving and/or transmitting in a unit time.

In some embodiments, the spatial dimension capability of the terminal device includes: a number of antennas that the terminal device is capable of using; and/or a number of channel layers that the terminal device is capable of receiving and/or transmitting.

In some embodiments, the throughput dimension capability of the terminal device includes one or more of:
an amount of control information in a control channel that the terminal device is capable of receiving and/or transmitting in a unit time;
a throughput of a data channel that the terminal device is capable of receiving and/or transmitting;
an amount of measurements that the terminal device is capable of performing in a unit time and/or an amount of measurements that the terminal device is capable of reporting in a unit time; or
a throughput of operations that the terminal device is capable of performing.

In some embodiments, the first information is carried in MAC signaling, DCI, or RRC signaling.

In some embodiments, the wireless communication device 110 further includes a second receiving module configured to receive third information reported by the terminal device. The third information indicates a plurality of capabilities supported by the terminal device.

In some embodiments, the operation of receiving the third information reported by the terminal device includes an operation of receiving the third information reported by the terminal device after the terminal device initially accesses.

In some embodiments, the first transmission module 1101 is further configured to transmit fourth information to the terminal device. The fourth information is used to instruct the terminal device to complete capability switching within a first period of time.

In some embodiments, the first period of time is determined based on the capability of the terminal device prior to the capability switching.

A terminal device may perform capability switching based on an indication of a network device. That is, the terminal device may switch from a first capability to a second capability in accordance with the first information transmitted by the network device. Or, the terminal device may switch the capability without an indication of the network device, and the terminal device may actively switch the capability without an instruction of the network device. An embodiment of the present application provides another wireless communication apparatus applied to a terminal device, the apparatus includes: a switching module configured to switch the terminal device from a first capability to a second capability, herein the terminal device supports a plurality of capabilities including the first capability and the second capability. Further, in some embodiments, the first capability is a current capability of the terminal device. For an embodiment in which the terminal device actively switches the capability, further, in some embodiments, the wireless communication device further includes a second transmission module configured to transmit fifth information to the network device, the fifth information indicates that the terminal device has switched to the second capability.

For an embodiment in which the terminal device actively switches the capability, the definition of the capability is the same as described above, i.e., the capability includes one or more of:
a time domain dimension capability of the terminal device;
a frequency domain dimension capability of the terminal device;
a spatial dimension capability of the terminal device; or
a throughput dimension capability of the terminal device.

Further embodiments of each dimensional capability described above may be understood with reference to the foregoing description and will not be described in detail herein.

Those skilled in the art should understand that the related description of the above-described wireless communication device 100 according to the embodiment of the present application can be understood with reference to the related description of the method embodiment on the terminal device side of the embodiment of the present application. Those skilled in the art should understand that the related description of the above-described wireless communication device 110 according to the embodiment of the present application can be understood with reference to the related description of the method embodiment on the network device side according to the embodiment of the present application.

FIG. 12 is a schematic structural diagram of a communication device provided by an embodiment of the present application. The communication device may be a terminal device or a network device. The communication device 120 illustrated in FIG. 12 includes a processor 1201 that can call and execute a computer program from a memory to implement the methods in the embodiments of the present application.

Optionally, as shown in FIG. 12, the communication device 120 may further include a memory 1202. Here, the processor 1201 may call and execute a computer program from the memory 1202 to implement the methods in the embodiments of the present application.

The memory 1202 may be a separate device independent of the processor 1201, or may be integrated in the processor 1201.

Optionally, as shown in FIG. 12, the communication device 120 may further include a transceiver 1203, and the processor 1201 may control the transceiver 1203 to communicate with other devices, specifically, to transmit information or data to other devices or receive information or data transmitted by other devices.

Here, the transceiver 1203 may include a transmitter and a receiver. The transceiver 1203 may further include an antenna, and the number of antennas may be one or more.

Optionally, the communication device 120 may specifically be a network device according to the embodiments of the present application, and the communication device 120 may realize corresponding processes implemented by the network device in each method of the embodiments of the present application, which will not be described again here for simplicity.

Optionally, the communication device 120 may specifically be a mobile terminal/terminal device of the embodiment of the present application, and the communication device 120 may realize corresponding processes realized by the mobile terminal/terminal device in each method of the embodiments of the present application, which will not be described again here for simplicity.

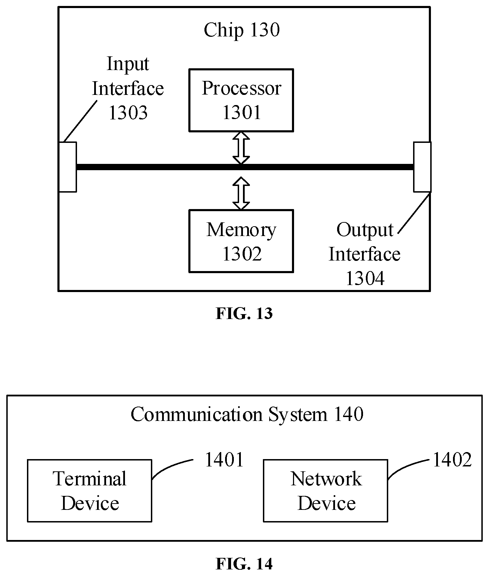

FIG. 13 is a schematic structural diagram of a chip according to an embodiment of the present application. The chip 130 illustrated in FIG. 13 includes a processor 1301 that can call and execute a computer program from a memory to implement the methods in the embodiments of the present application.

Optionally, as shown in FIG. 13, the chip 130 may further include a memory 1302. Here, the processor 1301 may call and execute a computer program from the memory 1302 to implement the methods in the embodiments of the present application.

The memory 1302 may be a separate device independent of the processor 1301, or may be integrated in the processor 1301.

Optionally, the chip 130 may also include an input interface 1303. Here, the processor 1301 may control the input interface 1303 to communicate with other devices or chips, specifically, to acquire information or data transmitted by other devices or chips.

Optionally, the chip 130 may also include an output interface 1304. The processor 1301 may control the output interface 1304 to communicate with other devices or chips, specifically, to output information or data to other devices or chips.

Optionally, the chip can be applied to the network device in the embodiments of the present application, and the chip can realize the corresponding flow implemented by the network device in each method of the embodiments of the present application, which will not be described again here for simplicity.

Optionally, the chip can be applied to the mobile terminal/terminal device in the embodiments of the present application, and the chip can realize the corresponding flow implemented by the mobile terminal/terminal device in each method of the embodiments of the present application, which will not be described again here for simplicity.

It should be understood that the chip mentioned in the embodiment of the present application may also be referred to as a system-level chip, a system chip, a chip system, a system-on-chip chip, or the like.

FIG. 14 is a schematic block diagram of a communication system provided by an embodiment of the present application. As shown in FIG. 14, the communication system 140 includes a terminal device 1401 and a network device 1402.

The terminal device 1401 may be used to realize the corresponding functions realized by the terminal device in the above-described methods, and the network device 1402 may be used to realize the corresponding functions realized by the network device in the above-described methods, which will not be described again here for simplicity.

It should be understood that the processor of the embodiments of the present application may be an integrated circuit chip having signal processing capability. In the implementation process, the operations of the above-described method embodiments may be completed by hardware integrated logic circuitry or instructions in the form of software in the processor. The processor may be a general purpose processor, a Digital Signal Processor (DSP), an Application Specific Integrated Circuit (ASIC), a Field Programmable Gate Array (FPGA) or other Programmable logic device, a discrete Gate or transistor logic device, or a discrete hardware component. The methods, operations, and logical block diagrams disclosed in the embodiments of the present application may be implemented or executed. The general purpose processor may be a microprocessor or the processor may be any conventional processor or the like. The operations of the methods disclosed in connection with the embodiments of the present application may be directly embodied as being executed by a hardware decoding processor, or may be executed by a combination of hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory and completes the operations of the methods in combination with its hardware.

It can be understood that the memory in the embodiments of the present application may be a volatile memory or a non-volatile memory, or may include both volatile and non-volatile memories. The non-volatile Memory may be a Read-Only Memory (ROM), a Programmable Read-Only Memory (PROM), an Erasable Programmable Read-Only Memory (EPROM), an Electrically Erasable Programmable Read-Only Memory (EPROM), or a flash Memory. The volatile Memory may be a Random Access Memory (RAM), which serves as an external cache. By way of illustration, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable types of memory.

It should be understood that the above-described memory is exemplary but not limiting. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memory in embodiments of the present application is intended to include, but is not limited to, these and any other suitable types of memory.

The embodiments of the present application also provide a computer-readable storage medium for storing a computer program.

Optionally, the computer-readable storage medium can be applied to the network device in the embodiments of the present application, and the computer program causes the computer to execute the corresponding flow implemented by the network device in each method of the embodiments of the present application, which will not be described again here for simplicity.

Optionally, the computer-readable storage medium can be applied to the mobile terminal/terminal device in the embodiments of the present application, and the computer program causes the computer to execute corresponding processes implemented by the mobile terminal/terminal device in each method of the embodiments of the present application, which will not be described again here for simplicity.

The embodiments of the present application also provide a computer program product including computer program instructions.

Optionally, the computer program product can be applied to the network device in the embodiments of the present application, and the computer program instruction causes the computer to execute the corresponding flow implemented by the network device in each method of the embodiments of the present application, which will not be described again here for simplicity.

Optionally, the computer program product can be applied to the mobile terminal/terminal device in the embodiments of the present application, and the computer program instruction causes the computer to execute the corresponding flow implemented by the mobile terminal/terminal device in each method of the embodiments of the present application, which will not be described again here for simplicity.

The embodiments of the present application also provide a computer program.

Optionally, the computer program can be applied to the network device in the embodiments of the present application, and when the computer program is run on the computer, the computer executes the corresponding flow implemented by the network device in each method of the embodiments of the present application, which will not be described again here for simplicity.

Optionally, the computer program can be applied to the mobile terminal/terminal device in the embodiments of the present application, and when the computer program is run on the computer, the computer executes the corresponding flow implemented by the mobile terminal/terminal device in each method of the embodiments of the present application, which will not be described again here for simplicity.

Those of ordinary skill in the art will recognize that the elements and algorithm operations of the various embodiments described in connection with the embodiments disclosed herein can be implemented in electronic hardware, or a combination of computer software and electronic hardware. Whether these functions are performed in hardware or software depends on the specific application and design constraints of the technical solution. The skilled artisan may implement the described functionality using different methods for each particular application, but such implementation should not be considered beyond the scope of the present application.

Those skilled in the art can clearly understand that for convenience and simplicity of the description, the specific operating processes of the above-described systems, devices, and units can be referred to the corresponding processes in the above-described method embodiments, and will not be described again here.

In the several embodiments provided herein, it should be understood that the disclosed systems, apparatuses, and methods may be implemented in other ways. For example, the device embodiments described above are merely illustrative. For example, the division of the units is merely a logical function division, and there may be other division methods in actual implementation. For example, multiple units or components may be combined or integrated into another system, or some features may be ignored or not implemented. Further, the coupling or direct coupling or communication connection with each other shown or discussed may be through some interface, indirect coupling or communication connection of devices or units, may be in electrical, mechanical or other form.

The units described as separate components may or may not be physically separated, and the components shown as units may or may not be physical units, i.e. may be located in one place, or may be distributed over multiple network units. Some or all of the units may be selected according to actual needs to achieve the purpose of the solution of the present embodiment.

In addition, each functional unit in each embodiment of the present application may be integrated in one processing unit, each unit may physically exist alone, or two or more units may be integrated in one unit.

The functions, if implemented in the form of software functional units and sold or used as stand-alone products, may be stored in a computer readable storage medium. Based on such an understanding, the technical solution of the present application may be embodied in the form of a software product in essence or a part that contributes to the prior art or a part of the technical solution, the computer software product is stored in a storage medium and includes several instructions for causing a computer device (which may be a personal computer, a server, or a network device, etc.) to perform all or part of the operations of the methods described in various embodiments of the present application. The storage medium includes various media capable of storing program code, such as a USB flash drive, a mobile hard disk, a Read-Only Memory (ROM), a Random Access Memory (RAM), a magnetic disk or an optical disk.

The above are only specific embodiments of the present application, but the protection scope of the present application is not limited thereto. Changes or substitutions which can be easily thought by any person familiar with the technical field within the technical scope disclosed in the present application should be covered by the protection scope of the present application. Therefore, the protection scope of the present application should be determined by the protection scope of the claims.

## Claims

1. A wireless communication method, comprising:
receiving, by a terminal device, first information transmitted by a network device, the first information indicating a switching capability of the terminal device; and
switching, by the terminal device according to the first information, from a first capability to a second capability, the terminal device supporting a plurality of capabilities comprising the first capability and the second capability.

2. The method of claim 1, wherein the first capability is a current capability of the terminal device.

3. The method of claim 1, further comprising:
transmitting, by the terminal device, a first request to the network device, the first request being used to request a switching capability.

4. The method of claim 3, wherein the first request carries second information, the second information indicating a capability of the terminal device to expect switching.

5. The method of any one of claims 1-4, wherein the capability comprises one or more of:
a time domain dimension capability of the terminal device;
a frequency domain dimension capability of the terminal device;
a spatial dimension capability of the terminal device; or
a throughput dimension capability of the terminal device.

6. The method of claim 5, wherein the time domain dimension capability of the terminal device comprises:
a time interval of unit-time channels that the terminal device is capable of receiving and/or transmitting, wherein a unit-time channel refers to a control channel and/or a data channel of a unit time.

7. The method of claim 5, wherein the frequency domain dimension capability of the terminal device comprises:
a bandwidth of a control channel and/or a data channel that the terminal device is capable of receiving and/or transmitting in a unit time.

8. The method of claim 5, wherein the spatial dimension capability of the terminal device comprises:
a number of antennas that the terminal device is capable of using; and/or
a number of channel layers that the terminal device is capable of receiving and/or transmitting.

9. The method of claim 5, wherein the throughput dimension capability of the terminal device comprises one or more of:
an amount of control information in a control channel that the terminal device is capable of receiving and/or transmitting in a unit time;
a throughput of a data channel that the terminal device is capable of receiving and/or transmitting;
an amount of measurements that the terminal device is capable of performing in a unit time and/or an amount of measurements that the terminal device is capable of reporting in a unit time; or
a throughput of operations that the terminal device is capable of performing.

10. The method of any one of claims 1-9, wherein the first information is carried in Medium Access Control (MAC) signaling, Downlink Control Information (DCI) or Radio Resource Control (RRC) signaling.

11. The method of any one of claims 1-10, further comprising:
reporting, by the terminal device, third information to the network device, the third information indicating a plurality of capabilities supported by the terminal device.

12. The method of claim 11, wherein reporting, by the terminal device, the third information to the network device, comprises:
reporting, by the terminal device, the third information to the network device after initial access.

13. The method of claim 1, wherein switching, by the terminal device, from the first capability to the second capability, comprises:
switching, by the terminal device, from the first capability to the second capability within a first period of time.

14. The method of claim 13, further comprising:
receiving, by the terminal device, fourth information transmitted by the network device, the fourth information indicates the first period of time, wherein the first period of time is determined based on the first capability.

15. The method of any one of claims 1-14, further comprising:
performing, by the terminal device, measurement based on a measurement parameter corresponding to the second capability.

16. The method of claim 15, wherein performing, by the terminal device, measurement based on the measurement parameter corresponding to the second capability, comprises:
performing, by the terminal device after a second period of time following the switching to the second capability, measurement based on the measurement parameter corresponding to the second capability.

17. A wireless communication method, comprising:
transmitting, by a network device, first information to a terminal device, the first information indicating a switching capability of the terminal device.

18. The method of claim 17, further comprising:
receiving, by the network device a first request transmitted by the terminal device, the first request is used to request a switching capability.

19. The method of claim 18, wherein the first request carries second information, the second information indicates a capability of the terminal device to expect switching.

20. The method of any one of claims 17-19, wherein the capability comprises one or more of:
a time domain dimension capability of the terminal device;
a frequency domain dimension capability of the terminal device;
a spatial dimension capability of the terminal device; or
a throughput dimension capability of the terminal device.

21. The method of claim 20, wherein the time domain dimension capability of the terminal device comprises:
a time interval of unit-time channels that the terminal device is capable of receiving and/or transmitting, wherein a unit-time channel refers to a control channel and/or a data channel of a unit time.

22. The method of claim 20, wherein the frequency domain dimension capability of the terminal device comprises:
a bandwidth of a control channel and/or a data channel that the terminal device is capable of receiving and/or transmitting in a unit time.

23. The method of claim 20, wherein the spatial dimension capability of the terminal device comprises:
a number of antennas that the terminal device is capable of using; and/or
a number of channel layers that the terminal device is capable of receiving and/or transmitting.

24. The method of claim 20, wherein the throughput dimension capability of the terminal device comprises one or more of:
an amount of control information in a control channel that the terminal device is capable of receiving and/or transmitting in a unit time;
a throughput of a data channel that the terminal device is capable of receiving and/or transmitting;
an amount of measurements that the terminal device is capable of performing in a unit time and/or an amount of measurements that the terminal device is capable of reporting in a unit time; or
a throughput of operations that the terminal device is capable of performing.

25. The method of any one of claims 17-24, wherein the first information is carried in Medium Access Control (MAC) signaling, Downlink Control Information (DCI) or Radio Resource Control (RRC) signaling.

26. The method of any one of claims 17-25, further comprising:
receiving, by the network device, third information reported by the terminal device, the third information indicating a plurality of capabilities supported by the terminal device.

27. The method of claim 26, wherein receiving, by the network device, the third information reported by the terminal device comprises:
receiving, by the network device, the third information reported by the terminal device after the terminal device initially accesses.

28. The method of claim 26 or 27, wherein transmitting, by the network device, the first information to the terminal device, comprising:
transmitting, by the network device, the first information to the terminal device based on the third information.

29. The method of any one of claims 17-28, further comprising:
transmitting, by the network device, fourth information to the terminal device, the fourth information being used to instruct the terminal device to complete capability switching within a first period of time.

30. The method of claim 29, wherein the first period of time is determined based on a capability before the terminal device performs the capability switching.

31. A wireless communication apparatus, applied to a terminal device, the apparatus comprising:
a first receiving module, configured to receive first information transmitted by a network device, the first information indicating a switching capability of the terminal device; and
a switching module, configured to switch the terminal device from a first capability to a second capability according to the first information, the terminal device supporting a plurality of capabilities including the first capability and the second capability.

32. A wireless communication apparatus applied to a network device, the apparatus comprising:
a first transmission module configured to transmit first information to a terminal device, the first information indicating a switching capability of the terminal device.

33. A terminal device comprising: a processor and a memory for storing a computer program, the processor is configured to call and execute the computer program stored in the memory, to perform the method of any one of claims 1 to 16.

34. A network device comprising: a processor and a memory for storing a computer program, the processor is configured to call and execute the computer program stored in the memory, to perform the method of any one of claims 17 to 30.

35. A chip comprising: a processor configured to call and execute a computer program from a memory, to cause a device on which the chip is mounted to perform the method of any one of claims 1 to 16.

36. A chip comprising: a processor configured to call and execute a computer program from a memory, to cause a device on which the chip is mounted to perform the method of any one of claims 17 to 30.

37. A computer-readable storage medium for storing a computer program that causes a computer to perform the method of any one of claims 1 to 16.

38. A computer-readable storage medium for storing a computer program that causes a computer to perform the method of any one of claims 17 to 30.

39. A computer program product comprising computer program instructions that cause a computer to perform the method of any one of claims 1 to 16.

40. A computer program product comprising computer program instructions that cause a computer to perform the method of any one of claims 17 to 30.

41. A computer program that causes a computer to perform the method of any one of claims 1 to 16.

42. A computer program that causes a computer to perform the method of any one of claims 17 to 30.
